(19) Europäisches Patentamt / European Patent Office / Office européen des brevets

(11) **EP 4 286 470 B1**

(12) **EUROPEAN PATENT SPECIFICATION**

(45) Date of publication and mention of the grant of the patent:
**09.07.2025 Bulletin 2025/28**

(21) Application number: **23020273.1**

(22) Date of filing: **02.06.2023**

(51) International Patent Classification (IPC):
**C08L 1/02** (2006.01)   **C08L 63/00** (2006.01)

(52) Cooperative Patent Classification (CPC):
(C-Sets available)
**C08L 1/02; C08G 59/027; C08G 59/626**   (Cont.)

(54) **BIOCOMPOSITE OF MICRONIZED FIBERS OF EUCALYPTUS KRAFT PULP, BIOPLASTICS AND ADDITIVES AND ITS PRODUCTION PROCESS**

BIOKOMPOSIT AUS MIKRONISIERTEN FASERN AUS EUKALYPTUS-KRAFTZELLSTOFF, BIOKUNSTSTOFFEN UND ZUSATZSTOFFEN UND SEIN HERSTELLUNGSVERFAHREN

BIOCOMPOSITE DE FIBRES MICRONISÉES DE PÂTE KRAFT D'EUCALYPTUS, BIOPLASTIQUES ET ADDITIFS ET SON PROCÉDÉ DE PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.06.2022 PT 2022118030**

(43) Date of publication of application:
**06.12.2023 Bulletin 2023/49**

(73) Proprietors:
• **RAIZ - Instituto De Investigação Da Floresta E Papel**
  3800-783 Eixo, Aveiro (PT)
• **Universidade de Aveiro**
  3810-193 Aveiro (PT)

(72) Inventors:
• **Gaspar, Alexandre Miguel Ricardo**
  3800-783 Eixo (PT)
• **Neto, Carlos de Pascoal**
  3800-783 Eixo (PT)
• **Freire Barros, Carmen Sofia da Rocha**
  3810-193 Aveiro (PT)
• **Silvestre, Armando Jorge Domingues**
  3810-193 Aveiro (PT)
• **Afonso Valente, Bruno Filipe**
  3810-193 Aveiro (PT)
• **Cunha Vilela, Carla Andreia**
  3810-193 Aveiro (PT)

(56) References cited:
• **IMMONEN KIRSI ET AL: "Coupling of PLA and bleached softwood kraft pulp (BSKP) for enhanced properties of biocomposites", JOURNAL OF THERMOPLASTIC COMPOSITE MATERIALS, vol. 32, no. 3, 1 March 2018 (2018-03-01), US, pages 328 - 341, XP093058261, ISSN: 0892-7057, Retrieved from the Internet <URL:http://journals.sagepub.com/doi/full-xml/10.1177/0892705718759387> DOI: 10.1177/0892705718759387**
• **VALENTE BRUNO F. A. ET AL: "Effect of the Micronization of Pulp Fibers on the Properties of Green Composites", MOLECULES, vol. 26, no. 18, 15 September 2021 (2021-09-15), DE, pages 5594, XP055915972, ISSN: 1433-1373, Retrieved from the Internet <URL:https://www.ncbi.nlm.nih.gov/pmc/ivip/1420-3049/26/18/5594> DOI: 10.3390/molecules26185594**
• **BLEDZKI ANDRZEJ K. ET AL: "Physico-mechanical studies of wood fiber reinforced composites", POLYMER-PLASTICS TECHNOLOGY AND ENGINEERING, vol. 41, no. 3, 24 June 2002 (2002-06-24), US, pages 435 - 451, XP093183913, ISSN: 0360-2559, DOI: 10.1081/PPT-120004361**

**(Cont. next page)**

(52) Cooperative Patent Classification (CPC): (Cont.)

C-Sets
**C08L 1/02, C08L 1/14;**
**C08L 1/02, C08L 67/04**

**Description**

FIELD OF THE INVENTION

The present invention relates to the field of biocomposite materials and in particularly to a biocomposite comprising bioplastics, micronized eucalyptus Kraft pulp fibers and additives. The present invention further relates to its production process.

BACKGROUND OF THE INVENTION

The market for polymeric composite materials is still dominated, both in terms of value and in terms of volume, by composites based on matrices of petrochemical origin reinforced with glass fibers [1]. However, natural fibers have been increasingly used as an alternative to glass fibers to produce composite materials, called biocomposites, due to their high abundance, low production cost, renewable nature and biodegradability [2]. Additionally, the production and processing of composites with natural fibers, namely plant and animal fibers, also known as biocomposites, pose less risk to human health (resulting from exposure to fiberglass) and cause less wear and tear on equipment [2-4].

With an annual growth rate close to 14.2% between 2020 and 2028, the market for composites reinforced with natural fibers is expected to reach a value of USD 60 billion by the end of this period, which clearly demonstrates the growing interest in the use of natural fibers by the composites industry [5]. However, the sustainability of most biocomposites is still not desirable, since conventional thermoplastic matrices, such as polypropylene (PP) or polyethylene (PE), are derived from petrochemical sources and are neither renewable nor biodegradable [6]. In addition, the separation of matrices and fibers is difficult to perform, which makes it impossible to recycle these composites. Their disposal in landfills or incineration are also not viable options in view of their long-term impact on the environment [7-9].

In order to produce fully sustainable and environmentally friendly composites, all of their constituents must be of renewable origin and their production must not involve toxic or unsustainable reagents. Likewise, the resulting composite must, at its end-of-life, be fully biodegradable or recyclable. polylactic acid (PLA) and polyhydroxybutyrate (PHB) are two polyesters of biological origin, recyclable and biodegradable, with enormous potential to replace conventional thermoplastics [10,11]. PLA, which is obtained from a monomer of natural origin, has excellent mechanical properties, more specifically tensile and bending properties, although it has poor impact resistance. Furthermore, this bioplastic is non-toxic, stable to ultraviolet light and easily dyeable [12]. In turn, PHB is a polyester that belongs to the family of poly (hydroxyalkanoates) produced by a wide variety of microorganisms (e.g., Ralstonia eutropha and Aeromonas hydrophila) and that has properties comparable to those of polypropylene [11]. In addition to these polyesters, cellulose derivatives, for example cellulose acetate butyrate (CAB), are, from a sustainability point of view, an excellent alternative to the thermoplastics currently used. Furthermore, properties of these bioplastics, obtained by chemical modification of cellulose, can be easily adjusted by varying the degree of substitution of cellulose and the percentages of each of the substituent groups [13].

Although these bioplastics have a sustainable character, their current price is still relatively high, which constitutes a challenge in their large-scale use. However, PLA, PHB and CAB are part of a restricted group of commercially available bioplastics that can be easily processed by conventional technologies such as injection molding, blow molding, thermoforming, extrusion, among others [11,12]. Although these polymers are promising as matrices in composites, their brittleness and low impact strength still constitute a challenge to be overcome [14,15]. In this sense, and in order to overcome these disadvantages, natural fibers can be added to these matrices as reinforcements and various additives, such as plasticizers [16].

The combination of thermoplastic polymers (regardless of their fossil or biological origin) with natural fibres, more specifically with cellulose fibres, although it has advantages at an environmental level, it still faces some limitations. For example, the hydrophilicity and high aspect ratio of cellulosic fibers reduces their interfacial compatibility with thermoplastic matrices, usually of a hydrophobic nature, which leads to the formation of fiber aggregates, and consequently to materials with reduced homogeneity [17,18], as well as high water absorption and consequent dimensional instability [6]. In this sense, fiber pre-treatments, such as alkaline treatments [6], or chemical modifications, such as acetylation, benzoylation or silylation, generally improve compatibility between natural fibers and matrices and reduce water absorption [6].

On the other hand, additives such as compatibilizing agents, plasticizers, impact modifiers and lubricants, among others, can also be used to improve the properties of composites, improving processability and minimizing some of the main challenges mentioned above [14,19]. From an industrial perspective, the use of actives has an additional advantage, since they are simple to incorporate into the process and do not require multiple steps or complex processes, such as those involved in the chemical modifications of the fibers mentioned above [14].

Plasticizers are one of the most common classes of additives in the thermoplastics and composites industry, being essentially applied to decrease the stiffness and brittleness of thermoplastic matrices and to lower the melting and glass transition temperature, thus improving their flexibility and processability [20-22]. Generally, the plasticization of thermoplastic matrices also influences a range of other properties, such as density, viscosity, resistance to biodegradation, hardness, resistance to fracture, degree of crystallinity, among others [22]. Several families of compounds, including polyols (eg, glycerol [23] and poly(ethylene glycol) (PEG) [24]), triacetin [25], citrate esters (e.g., triethyl citrate (TEC) [26] or tributyl acetyl citrate (ATC) [27]), and epoxidized vegetable oils [19,28], have been investigated as potential plasticizers in composite materials . On the other hand, surfactants such as sophorolipids (glycolipids produced through fermentation processes) have been tested in thermoplastic matrices of renewable origin, such as PLA, PHB and polycaprolactone (PCL) [29], but not in composites of these thermoplastic matrices with cellulose fibers.

In addition to plasticizers, compatibilizing agents are often used as additives in the production of composite materials. Compatibilizing agents such as polymers grafted with maleic anhydride [30], diisocyanates [31], silanes [32] and even functionalized vegetable oils [33] have been the subject of investigation. Within this diversity of additives, functionalized vegetable oils are of particular relevance given their renewable origin, and greater sustainability, commercial availability, non-toxicity and relative low cost [34]. More specifically, epoxidized linseed [19] and soybean [15] oils have been highlighted as additives in PLA biocomposites, functioning simultaneously as compatibilizing agents and plasticizers [15,19,33]. Chen and co-authors [15] developed a technique in which epoxidized soybean oil (ESO) was polymerized in-situ at the interface between bamboo fibers and a PLA matrix, resulting in the formation of covalent bonds between poly(ESO) and fibers and between poly(ESO) and PLA, resulting in improved interfacial adhesion and better mechanical properties of the material. Immonen and co-authors [19] described a pre-treatment method for bleached softwood Kraft pulp fibers, which involves the steps of compacting the pulp fibers to form pellets in a compactor equipment developed for this purpose, after having previously sprayed the fibers with ESO. Afterwards, the pellets are left to dry overnight until they reach a certain percentage of humidity. The authors describe the subsequent extrusion of fiber pellets with PLA to form the biocomposite. The epoxidized linseed oil showed a plasticizing and compatibilizing effect on these composites. Peltola [33] and co-authors also used epoxidized linseed oil (ELO) in the preparation of PLA composites with bleached and unbleached Kraft pulps. It is highlighted in this study the undesirable effect of decreasing the pulps fiber size, during the production of the composite.

The patent application WO2006049658A2 discloses a method of producing composite structures composed of wood and thermoplastics, which additionally include lubricants, chosen from different compounds, such as a salt of 12-hydroxystearic acid, an amide of 12-hydroxystearic acid and combinations thereof, and castor oil, hydrogenated castor oil, partially hydrogenated castor oil and mixtures thereof. The composition described in the aforementioned patent application facilitates the production of these composites, while ensuring that they exhibit a commercially acceptable appearance. Preferably used thermoplastics include polyethylene, polypropylene, polyvinyl chloride and polystyrene.

The patent application WO2013122650A1 discloses a polymeric composite that includes chemical cellulosic pulp fibers in its constitution, preferably bleached Kraft pulp, in a percentage of 50% by weight, or less. The invention aims at the more economical production of this type of material. The pulp sheets used are previously disintegrated to enable the production of the composite. Among the thermoplastic polymers used are biopolymers, polyolefins and recycled plastics. Among the biopolymers are described polylactic acid, cellulose acetate, cellulose propionate and cellulose butyrate. The invention also includes the possibility of adding a mineral oil to help disperse the fibers in the biocomposite.

Patent US7256223B2 discloses a process for preparing a material, with physical and mechanical properties necessary for its application in pavements, which consists of mixing a polymeric material based on PLA with a plasticizer and a compatibilizer, in which the plasticizer is an epoxidized vegetable oil or an esterified and epoxidized oil. Optionally, cellulosic fibers can be added, not being, however, specified any treatments of the same for application in the described process.

Despite the developments described, there is still a need to develop new composites, with a completely renewable base, that can be produced using existing processes, in a simple way and in a few steps, and that demonstrate improved mechanical properties suitable for their possible and different applications, at the same time demonstrating biodegradability.

IMMONEN KIRSI ET AL., 2018: Coupling of PLA and bleached softwood kraft pulp (BSKP) for enhanced properties of biocomposites, JOURNAL OF THERMOPLASTIC COMPOSITE MATERIALS, 32:328-341 discloses epoxy-modified linseed oil containing spruce kraft pulp compounded with PLA. Bledzki Andrzej K. ET AL., 2002: Physico-mechanical studies of wood fiber reinforced composites, Polymer-Plastics Technology and Engineering, 41:435-451 discloses PLA- or PHB-based wood plastic composites comprising micronized Eucalyptus craft pulp.

SUMMARY OF THE INVENTION

The present invention relates to a biocomposite comprising a bioplastic and from 10% to 50% by weight of micronized eucalyptus Kraft pulp fibers based on the weight of the bioplastic and from 1% to 30% by weight based on the total weight of the biocomposite of an additive, and wherein the bioplastic is selected from the group consisting of polylactic acid, polyhydroxybutyrate and cellulose acetate butyrate, and the additive is an epoxy vegetable oil or a non-ionic sugar-based surfactant.

According to a preferred embodiment, the micronized eucalyptus Kraft pulp fibers have an aspect ratio of 8 to 45.

According to a preferred embodiment, the eucalyptus Kraft pulp is bleached or unbleached.

According to a preferred embodiment, the epoxidized vegetable oil is selected from the group consisting of linseed oil, palm oil, soybean oil and jatropha oil.

According to a preferred embodiment, the composite comprises polylactic acid or polyhydroxybutyrate and 7.5% by weight based on the total weight of the biocomposite of epoxidized linseed oil.

According to a preferred embodiment, the composite comprises polylactic acid or polyhydroxybutyrate and up to 5 % by weight based on the total weight of the biocomposite of epoxidized linseed oil.

According to a preferred embodiment, the composite comprises cellulose acetate butyrate and from 7.5% to 30% by weight based on the total weight of the biocomposite of epoxidized linseed oil.

According to a preferred embodiment, the composite comprises cellulose acetate butyrate and 7.5% weight based on the total weight of the biocomposite of epoxidized linseed oil.

According to a preferred embodiment, the composite comprises cellulose acetate butyrate and 30 % by weight based on the total weight of the biocomposite of epoxidized linseed oil.

A second aspect of the present invention relates to a process for producing the biocomposite, comprising a step of mixing an epoxidized vegetable oil or a non-ionic sugar-based surfactant with micronized eucalyptus Kraft pulp fibers prior to mixing the resulting composition with a bioplastic.

BRIEF DESCRIPTION OF THE DRAWINGS

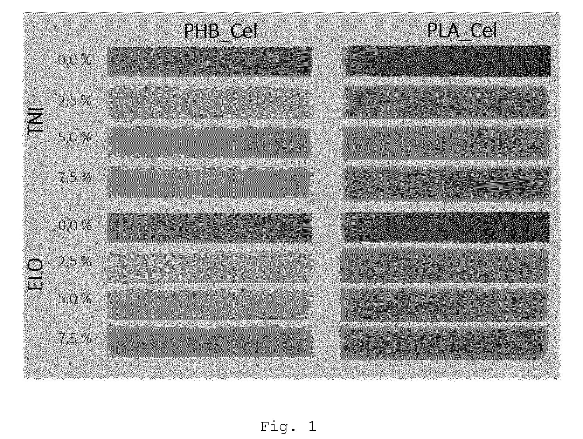

Figure 1. Photographs of the injection-molded specimens of polyhydroxybutyrate (PHB) and polylactic acid (PLA)-based composites reinforced with cellulose micronized fibers with different percentages of non-ionic surfactant (TNI) and epoxidized linseed oil (ELO).

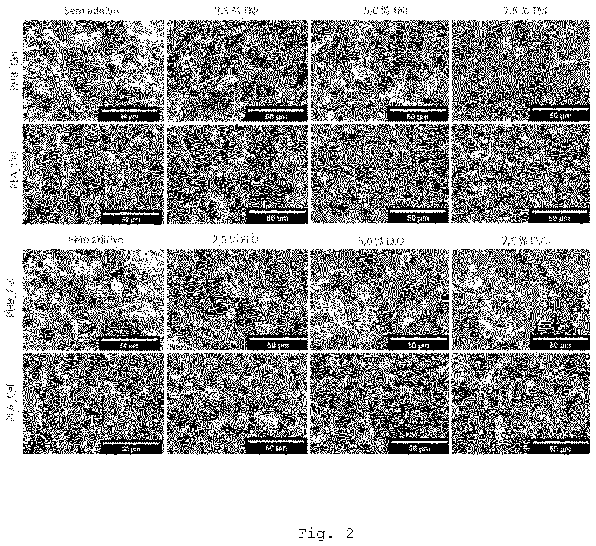

Figure 2. SEM micrographs of the fractured surfaces of PHB- and PLA-based composites without additives and with different contents of TNI and ELO additives.

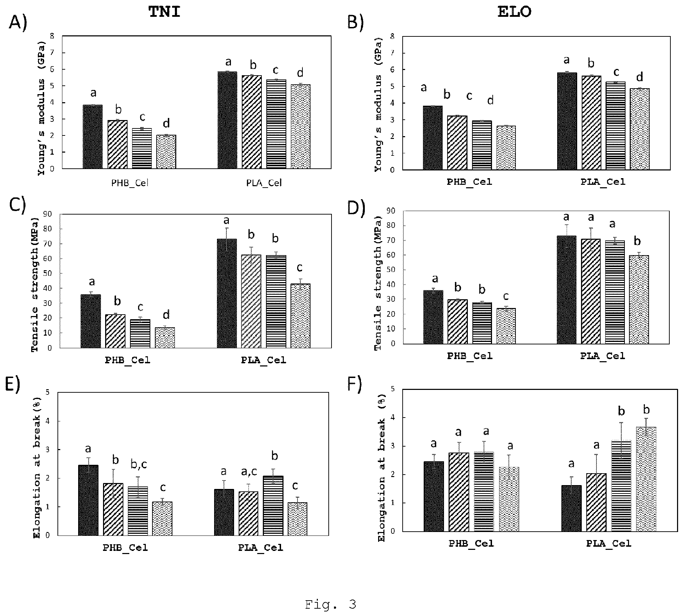

Figure 3. Tensile mechanical properties of PHB- and PLA-based composites without additives and with TNI (A,C,E) and ELO (B,D,F) additives. Different letters (a,b,c,d) indicate statistically significant differences ($p < 0.05$). Black bars - no additive, bars with diagonal stripes - 2.5% of the respective additive, bars with horizontal stripes - 5.0% of the respective additive, bars with wavy stripes - 7.5% of the respective additive.

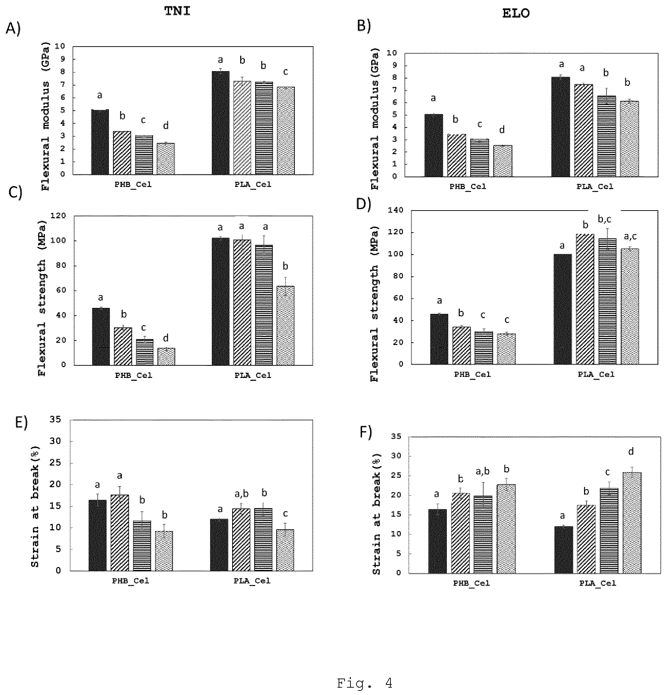

Figure 4. Flexural mechanical properties of PHB- and PLA-based composites without additives and with TNI (A,C,E) and ELO (B,D,F) additives. Different letters (a,b,c,d) indicate statistically significant differences ($p < 0.05$). Black bars - no additive, bars with diagonal stripes - 2.5% of the respective additive, bars with horizontal stripes - 5.0% of the respective additive, bars with wavy stripes - 7.5% of the respective additive.

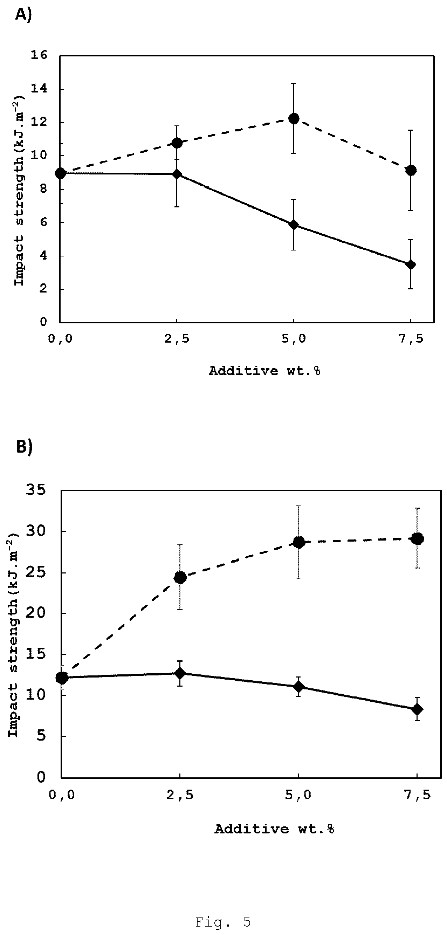

Figure 5. Impact strength of PHB- (A) and PLA-based composites (B) without additives and with different loads of TNI and ELO additives. A) PHB_Cel, B) PLA_Cel. Solid line and diamond symbols - TNI, dashed line and circle symbols - ELO.

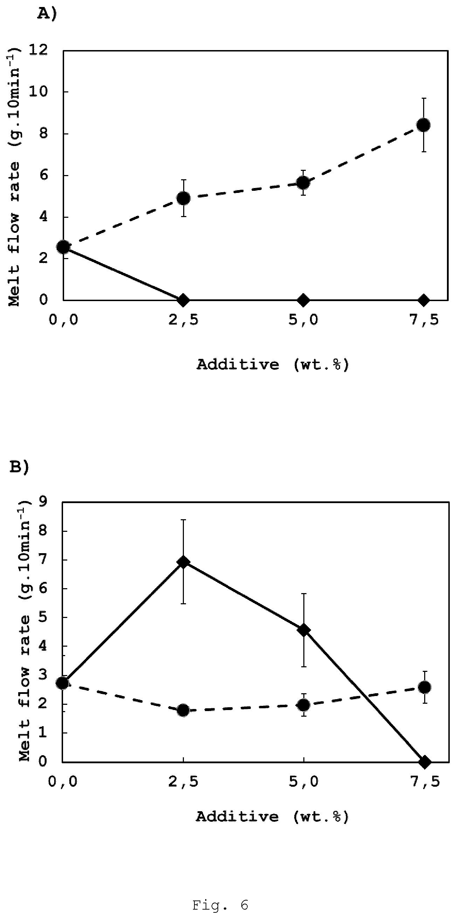

Figure 6. Melt flow rate of PHB- (A) and PLA-based composites (B), without additives and with different loads of TNI and ELO additives. A) PHB_Cel (175°C/5kg), B) PLA_Cel355 (190°C/2,16kg). Solid line and diamond symbols - TNI, dashed line and circle symbols - ELO.

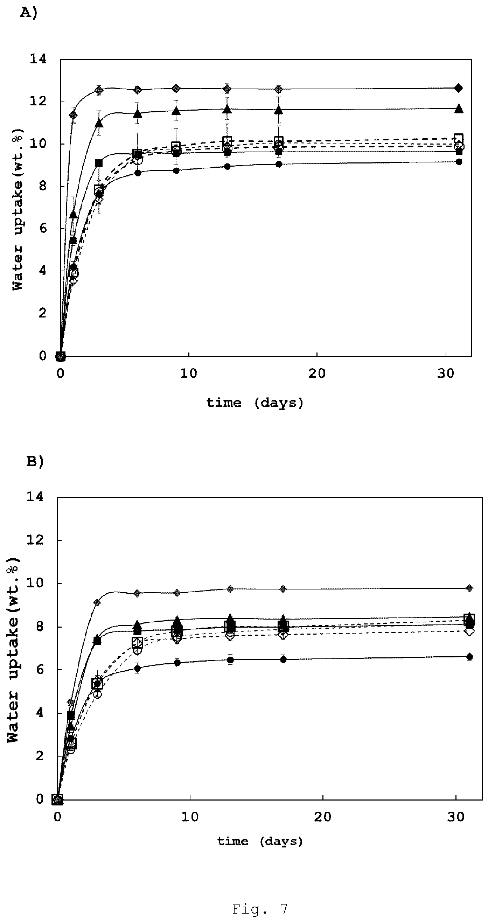

Figure 7. Water uptake capacity of PHB- (A) and PLA-based composites (B) without additives and with different loads of TNI and ELO additives. A) PHB_Cel, B) PLA_Cel355. Solid line and black circle symbols - no additive, solid line and black triangle symbols - 2.5% TNI, solid line and black square symbols - 5.0% TNI, solid line and black diamond symbols - 7.5% TNI, dashed line and unfilled diamond symbols - 2.5% ELO, dashed line and unfilled square symbols - 5.0% ELO, dashed line and unfilled circle symbols - 7.5% ELO.

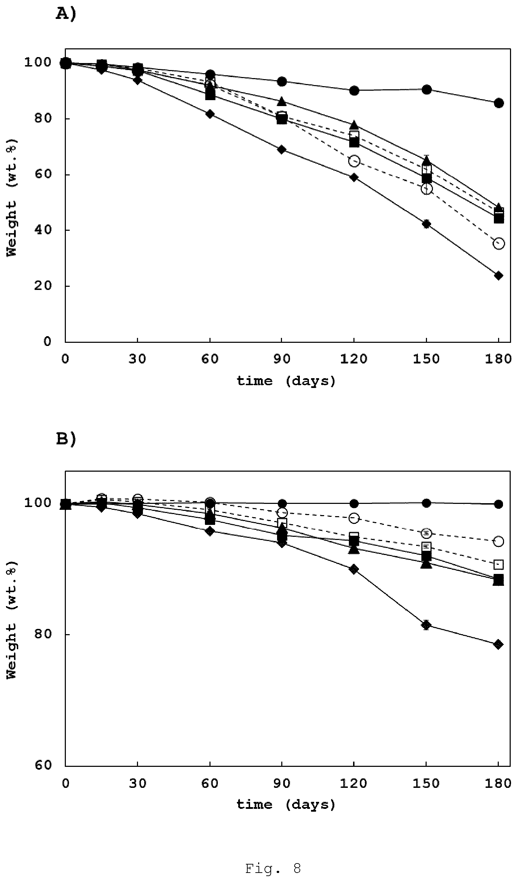

Figure 8. Weight loss as function of time for PHB (A) and PLA-based composites (B) without additives and with different loads of TNI and ELO additives. The standard deviations (not shown) are under 7.6% for PHB-based materials and under 3.9% for PLA-based materials. Solid line and black circle symbols - PHB/PLA, solid line and black triangle symbols - PHB/PLA_Cel, solid line and black square symbols - PHB/PLA_Cel 2.5% TNI, solid line and black diamond symbols - PHB/PLA_Cel 7.5% TNI, dashed line and empty square symbols - PHB/PLA_Cel 2.5% ELO, line a dashed and unfilled circle symbols - PHB/PLA_Cel 7.5% ELO.

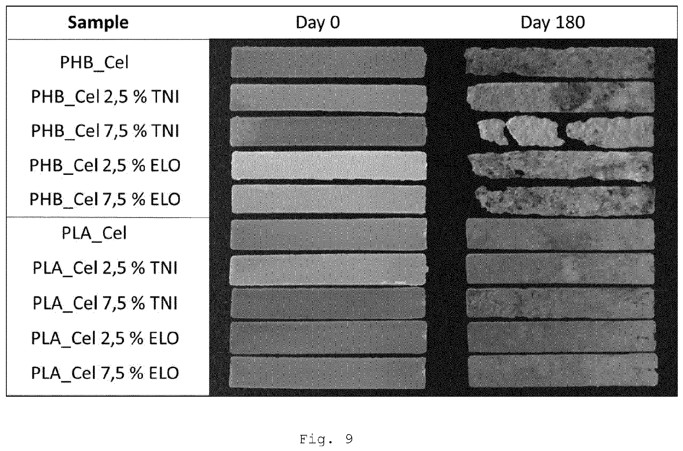

Figure 9. Photographs of the test specimens prior and after burial tests in compost medium for 180 days.

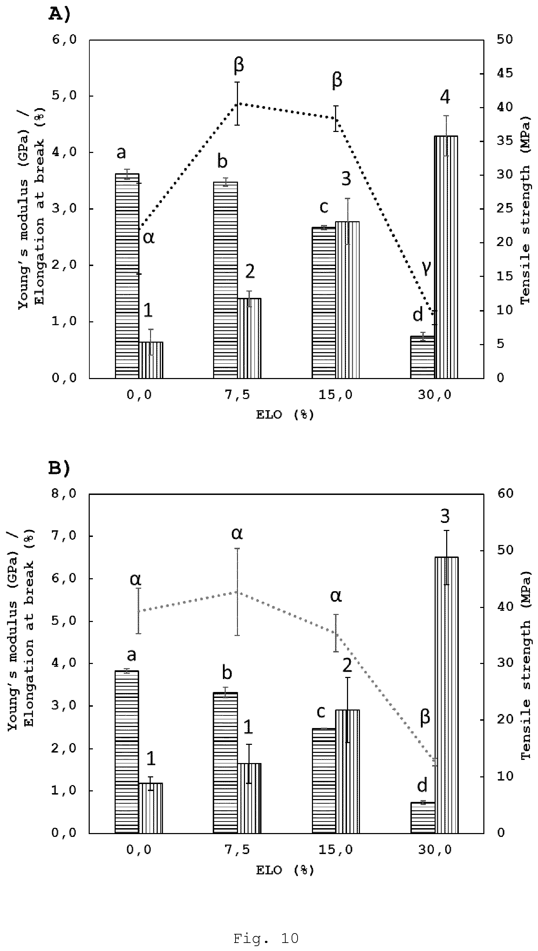

Figura 10. Tensile mechanical properties of composites based only on cellulose and plasticized with different ELO percentages. Different letters (a,b,c,d), ($\alpha,\beta,\gamma,\delta$) or different digits (1,2,3,4) indicate statistically significant differences (p < 0.05). A) CAB 381_Cel, B) CAB 553_Cel. Dotted line-maximum tensile strength, bars with horizontal lines - Young's modulus, vertical lines - elongation at break.

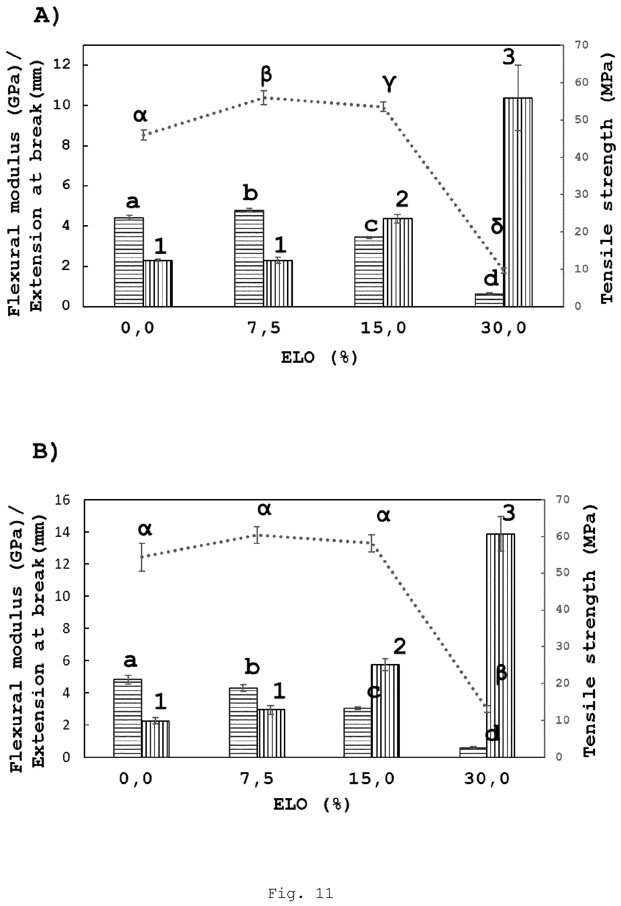

Figure 11. Flexural mechanical properties of composites based only on cellulose and plasticized with different ELO percentages. Different letters (a,b,c,d), ($\alpha,\beta,\gamma,\delta$) or different digits (1,2,3,4) indicate statistically significant differences (p < 0.05). A) CAB 381_Cel, B) CAB 553_Cel. Dotted line-maximum tensile strength, bars with horizontal lines - flexural modulus, vertical lines - extension at break.

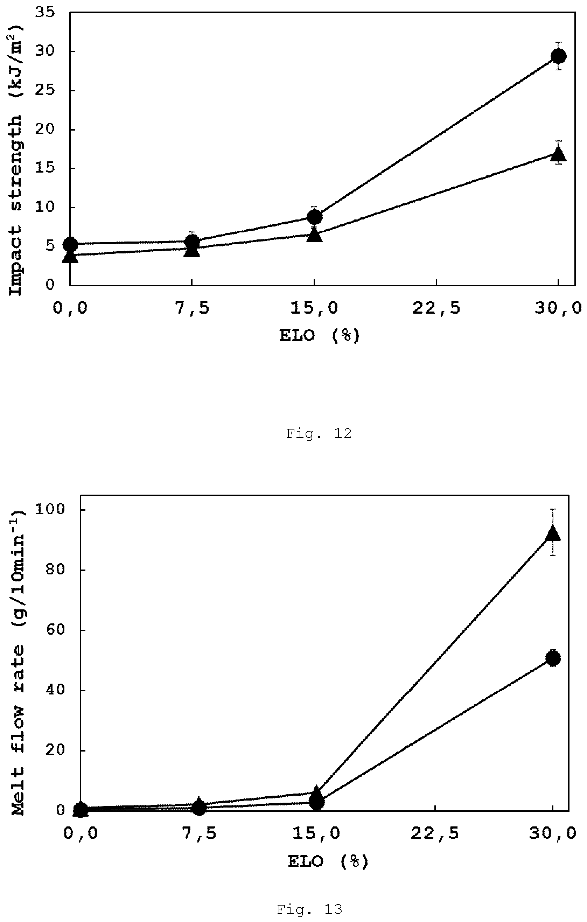

Figure 12. Impact strength of composites based only on cellulose and plasticized with different ELO percentages. Solid line and black triangle symbols - CAB 381_Cel, Solid line and black circle symbols - CAB 553_Cel.

Figure 13. Melt flow rate of composites based only on cellulose and plasticized with different ELO percentages. Solid line and black triangle symbols - CAB 381_Cel, Solid line and black circle symbols - CAB 553_Cel.

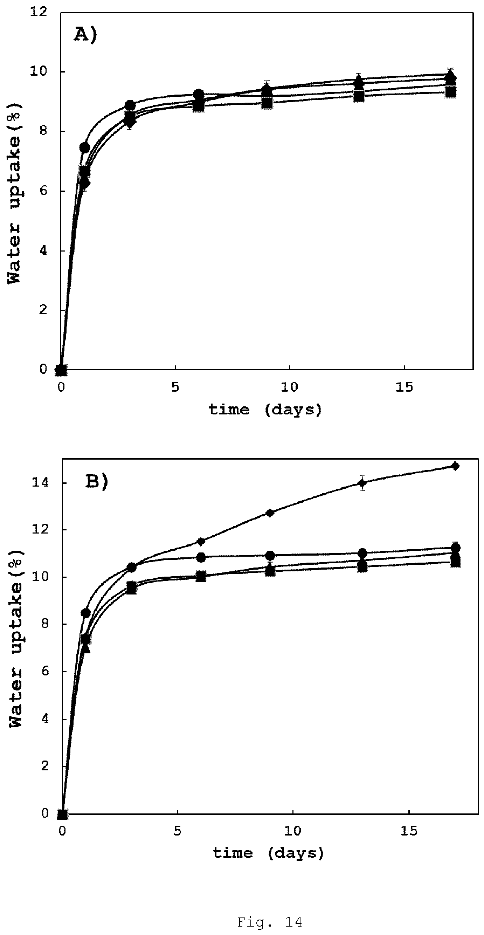

Figure 14. Water uptake capacity of composites based only on cellulose and plasticized with different ELO percentages. A) CAB 381_Cel, B) CAB 553_Cel. Solid line and black circle symbols - 0.0% ELO, solid line and black square symbols - 7.5% ELO, solid line and black triangle symbols - 15.0% ELO, solid line and black diamond symbols - 30.0% ELO.

DETAILED DESCRIPTION OF THE INVENTION

The present invention relates to a biocomposite comprising a bioplastic, micronized eucalyptus Kraft pulp fibers, and an additive, as described in this patent application and claim 1, of totally renewable origin, which can be produced through the common methods and equipment for the production of biocomposites, without prior chemical treatment of the fibers used, and shows significant improvements in relevant properties such as melt flow rate, water uptake capacity, flexural and impact strength. Properties such as impact strength or flow rate can be adjusted by using different amounts of these additives. Furthermore, their use is easy to implement in industrial processes with the added advantage of being environmentally friendly.

In the context of the present invention, a bioplastic refers to plastics derived from biomass sources such as, but not limited to, polylactic acid (PLA), polyhydroxybutyrate (PHB) and cellulose acetate butyrate (CAB).

In the context of the present invention, epoxidized vegetable oils are a class of bio-based plasticizers produced by the esterification of vegetable oils with polyols.

In the context of the present invention, a non-ionic sugar-based surfactant refers to a non-ionic surfactant composed of methylglucamide with sunflower oil (52%), glycerol (5%), water (10%) and propylene glycol (33%).

In the context of the present invention, the term Kraft refers to Kraft cooking or sulfate cooking. It is a chemical process that consists of cooking the wood in a cooking liquor usually made up of sodium hydroxide and sodium sulfide, at temperatures of the order of 140 to 180 °C, in pressurized reactors.

Within the scope of the present invention, bleached Kraft pulp refers to a pulp produced through the Kraft process and which is further subjected to a bleaching step. The bleaching step aims to continue the delignification of the wood, which occurs during cooking, by the action of oxidizing agents, such as oxygen, chlorine dioxide and hydrogen peroxide. When not subjected to bleaching after its Kraft cooking, the pulp refers to an unbleached Kraft pulp.

Within the scope of the present invention, micronization refers to a mechanical treatment to reduce the length and width of fibers to the micrometer range. It can be carried out by processes such as, but not limited to, grinding by knife action, ball action or shearing methods.

Within the scope of the present invention, aspect ratio of the fibers refers to the ratio between the length and the width of the fibers.

In the present invention, epoxidized vegetable oils such as, but not limited to, linseed oil, palm oil, soybean oil and jatropha oil can be used.

In the present invention, both bleached pulp and unbleached pulp can be used.

The present invention thus relates to a biocomposite comprising 10% to 50% by weight of micronized eucalyptus Kraft pulp fibers based on the weight of the bioplastic and from 1% to 30% by weight based on the total weight of the biocomposite of an additive, and wherein the bioplastic is selected from the group consisting of polylactic acid, polyhydroxybutyrate and cellulose acetate butyrate, and the additive is an epoxidized vegetable oil or a non-ionic sugar-based surfactant.

Examples

Materials and Methods

It was considered: Polyhydroxybutyrate (PHB), grade P226, with a melt flow rate of 10 g.10 min$^{-1}$ (180 °C, 5 kg), density of 1.25 g.cm$^{-1}$ and number-average molecular weight of 22200 $\pm$ 4500, was supplied by Biomer (Schwalbach, Germany); polylactic acid (PLA) grade 3100HP, with a melt flow rate of 24 g.10 min$^{-1}$ (210 °C, 2.16 kg) and molecular weight of 148 kDa, was supplied by NatureWorks (Minnesota, USA); mechanically treated (micronized) cellulose pulp fibers (average length and width of 332 $\mu$m and 12.5 $\mu$m, respectively) were obtained through a micronization procedure from eucalyptus bleached kraft pulp; epoxidized linseed oil (ELO), composed of stearic (3-5%), palmitic (5-7%), oleic (18-26%), linoleic (14-20%) and linolenic (51-56%) acids, was acquired from Traquisa (Barcelona, Spain). ELO has an oxirane oxygen minimum of 8%, iodine value under 5%, density of 1.1 g.cm$^{-3}$ and viscosity between 800 and 1200 cP. The nonionic surfactant (TNI) composed of sunflower oil methylglucamide (52%), glycerin (5%), water (10%) and propyleneglycol (33%), was obtained from Clariant (Barcelona, Spain); compost medium was obtained by selective composting of lignocellulosic residues from forest exploration and from food wastes was acquired from Nutrimais (Gondomar, Portugal). The specifications of the compost medium are as follows: moisture = 29.23 $\pm$ 1.41%, water-holding capacity = 170.33 $\pm$ 12.34%, organic matter = 57.66 $\pm$ 11.5.%, pH = 8.9 $\pm$ 0.6, and elemental composition = 32.03 $\pm$ 2.66% (total carbon (C)), 2.41 $\pm$ 0.48% (total nitrogen (N)), 1.96 $\pm$ 0.39 (total potassium (K)), 0.71 $\pm$ 0.14% (total magnesium (Mg)), 14.50 $\pm$ 2.90% (total calcium (Ca)), and 1.33 $\pm$ 0.27% (total phosphorous (P)). Product specifications are as follows: humidity = 29,23 $\pm$ 1,41 %, water uptake capacity = 170,33 $\pm$ 12,34 %, organic matter = 57,66 $\pm$ 11,5 %, pH = 8,9 $\pm$ 0,6, e elementary composition = 32,03 $\pm$ 2,66 % (total carbon (C)), 2,41 $\pm$ 0,48 % (total nitrogen (N)), 1,96 $\pm$ 0,39 % (total potassium (K)), 0,71 $\pm$ 0,14 % (total magnesium (Mg)), 14,50 $\pm$ 2,90 % (total calcium (Ca)), e 1,33 $\pm$ 0,27 % (total phosphorus (P)).

Example 1

Production and processing of biocomposites

The composite materials without additives were obtained by melt mixing the thermoplastic polymers (PLA ou PHB) with the micronized cellulose fibers. For the formulations with additives, the fibres, with an aspect ratio of 26.6, were premixed with ELO or TNI, followed by melt mixing with the respective matrices. The additives were incorporated in percentages ranging from 2.5 to 7.5 wt.% based on the total weight of the composites. In all composites, a 60:40 ratio of the polymeric matrix to the reinforcement fibers was maintained, that is, 40% of fiber in relation to the biopolymer. The formulations were mixed in a Brabender W 30 EHT Plastograph EC mixer (Brabender, Duisburg, Germany) for 15 minutes at 50 rpm at a temperature of 180°C for PLA-based composites and 170°C for PHB-based composites. The rectangular and dog-bone shaped test specimens for the characterization assays were produced through injection molding in a Thermo Scientific Haake Minijet II (Thermo Scientific, Waltham, Massachusetts, USA). PLA composites were injected at 195 °C with the mold temperature between 100 °C and 125 °C and PHB composites were injected at 185 °C with a 65 °C mold. The injection pressure was set at 800 bar during 15 seconds with a post-injection pressure of 200 bar for another 5 seconds.

Characterization

The density of the composites was calculated by dividing the test specimens' weight by their volume. Rectangular specimens (8 $\times$ 1 $\times$ 0.4 cm$^3$) with a volume of 3.2 cm$^3$ were used for density calculation using at least five replicates.
Scanning electron microscopy (SEM) images of the fracture zones of the composites were acquired on a FE-SEM Hitachi SU70 microscope (Hitachi High-Technologies Corporation, Tokyo, Japan) operated at 15.0 kV. Prior to the analysis, the samples were coated with a carbon film.
The determination of the Young's modulus, tensile strength and elongation at break were performed according ISO-527-2 (ISO 527-2:1996 Plastics - Determination of tensile properties). The tests of, at least, six dog bone-like specimens with test dimensions of 30 $\times$ 4.25 $\times$ 2.10 mm$^3$ were done at a crosshead velocity of 5 mm·min$^{-1}$ using a 10 kN static load cell. The flexural properties of the composites were determined following the three-point loading model according to ISO 178 (ISO 178:2003 Plastics - Determination of flexural properties). Five rectangular specimens (80 $\times$ 10 $\times$ 4 mm$^3$) were tested with a 500 N load cell at a velocity of 5 mm·min$^{-1}$. The span length between supports was set at 64 mm. The strain at break was calculated as the ratio between the extension at break and the maximum deflection (20 mm).

Both the tensile and flexural tests were conducted on a universal testing machine Instron 5564 (Instron Corporation, Norwood, MA, USA). The unnotched charpy (edgdewise) impact strength of ten specimens with dimensions of $80 \times 10 \times 4$ $mm^3$ was acquired on a Ray Ran Universal Pendulum impact system (Ray-Ran Test Equipment Ltd., Nuneaton, UK). The equipment was operating a pendulum of 4 J and the support span was set at 64 mm, according to ISO 179/1eU (ISO 179-1:2010 Plastics-Determination of the Charpy impact properties).

The melt flow rate of the composites was evaluated on a Melt Flow Indexer Devenport (MFR-9) (Ametek, Denmark), according to ASTM D1238 (ASTM D1238, 2004 Starndar Test Method for Melt Flow Rates of Thermoplastics by Extrusion Plastometer). The temperature selected for analysis of the PHB-based composites was 175 °C and for PLA-based composites was 190 °C. At least five cut-offs for each sample were weighted and the melt flow rate (MFR) was calculated as follows:

$$MFR\ (⟦g.10\ min⟧\ ^\wedge(-1)\ ) =\ (600\ \times m)/t\ (1)$$

where $m$ is the average weight of the cut-offs, in grams, and t is the cut-off time interval, in seconds.

Thermogravimetric analysis (TGA) was carried out on a SETSYS Setaram TGA analyser (SETARAM Instrumentation, Lyon, France) equipped with a platinum cell. Approximately 10 mg of each sample was heated from room temperature to 800 °C at a rate of 10 °C·m$^{-1}$ under a nitrogen flow.

The differential scanning calorimetry (DSC) thermograms of the matrices and composites were obtained on a Perkin Elmer Diamon DSC unit (PerkinElmer, Waltham, MA, USA). The samples were placed in aluminum capsules and heated from -40 to 220 °C, hold for 5 min at 220 °C to eliminate the thermal history, cool back to -40 °C and reheated from -40 to 220 °C at a heating rate of 10 °C·min$^{-1}$. The results were recorded on the second heating cycle.

To determine the water uptake capacity, three specimens of each sample ($60 \times 10 \times 1$ mm$^3$) were immersed in distilled water, at room temperature, during a period of 31 days. Then, the specimens were periodically removed from the water, wiped with tissue paper and weighted to determine the wet weight. The water uptake (%) at time t was calculated as represented in Equation 2:

$$Water\ uptake\ (\%)\ =\ ((m_t - m_0))/m_0\ \times 100\ (2)$$

where $m_0$ is the specimen's initial weight and $m_t$ is the weight of the specimens after immersion for a t time period.

Burial tests of the neat matrices and composites (with and without additives) were performed by measuring the weight loss of the composites after burying them in compost medium. Prior to the tests, composite specimens ($60 \times 10 \times 1$ mm$^3$) were preconditioned by drying them at 40 °C in an oven for a period of 48 h and the initial weight was recorded ($m_0$). Then, the specimens were buried in compost in a 1 L container, at a distance of 1 cm from the bottom. Water was added to the containers to adjust the water soil content to 60 wt.% of the water-holding capacity. The assays were conducted at room temperature (18 - 25 °C) and the humidity of the soil was constantly adjusted by adding water every couple of days. At the end of 15, 30, 60, 90, 120, 150 and 180 days, three specimens from each sample were retrieved, carefully washed to remove any soil residues and dried at 40 °C for 48 h. Finally, the weight of the specimens was recorded ($m_t$) in order to measure the weight loss according to Equation 3:

$$Weight\ loss\ (\%)\ =\ (m_0 - m_t)/m_0\ \times 100\ (3)$$

Statistical analysis of all mechanical properties data was performed using the analysis of variance (ANOVA) and Tukey's mean comparison test (OriginPro 9.6.5, OriginLab Corporation, MA, USA) with the statistical significance established at $p < 0.05$.

According to Figure 1, the composites without additives have a darker color than the corresponding composites with ELO or TNI. The incorporation of ELO and TNI made it possible to attenuate the darkening of the composites during processing for their production.

All composites, with or without additives, have similar density values as listed in Table 1. In fact, and given the relatively low amount of the additives, the average density of the composites is only marginally affected. Even so, a slight decrease trend on the density of the composites can be noted as the percentage of additive increases.

Table 1. Density of the PHB- and PLA-based composites reinforced with cellulose micronized fibers without additives and with different percentages of TNI and ELO additives.

| Sample | Density (g.cm$^{-3}$) | Sample | Density (g.cm$^{-3}$) |
|---|---|---|---|
| PHB_Cel | 1.34 ± 0.01 | PLA_Cel | 1.38 ± 0.00 |
| PHB_Cel 2.5% TNI | 1.34 ± 0.02 | PLA_Cel 2.5% TNI | 1.36 ± 0.02 |

(continued)

| Sample | Density (g.cm$^{-3}$) | Sample | Density (g.cm$^{-3}$) |
|---|---|---|---|
| PHB_Cel 5.0% TNI | 1.33 ± 0.02 | PLA_Cel 5.0% TNI | 1.37 ± 0.00 |
| PHB_Cel 7.5% TNI | 1.30 ± 0.03 | PLA_Cel 7.5% TNI | 1.37 ± 0.01 |
| PHB_Cel 2.5% ELO | 1.34 ± 0.01 | PLA_Cel 2.5% ELO | 1.37 ± 0.00 |
| PHB_Cel 5.0% ELO | 1.33 ± 0.02 | PLA_Cel 5.0% ELO | 1.36 ± 0.00 |
| PHB_Cel 7.5% ELO | 1.30 ± 0.02 | PLA_Cel 7.5% ELO | 1.35 ± 0.00 |

Structural and morphological characterization

Scanning electronic microscopy was used to evaluate the morphology of the composites with different additive contents. The SEM micrographs of the fracture zones after tensile testing are displayed in Figure 2. From the analysis of these micrographs, it can be observed that, despite some fiber pull-outs and voids, the compatibility between the fibers and matrices on the composites without additives is relatively good, particularly in the composites based on PLA.

Regarding composites with TNI, no significant differences were observed, either for those based on PLA or those based on PHB. In composites with ELO, mainly in those with PLA, the interface between the fibers and the matrix is sometimes indistinguishable, which indicates that this additive promoted an improvement in the interfacial adhesion and a superior compatibility between the fibers and the PLA.

Mechanical properties

Tensile

The tensile performance of the composites with and without additives is presented in Figure 3. The Young's modulus and tensile strength decreased progressively with the augmentation of the content of the TNI and ELO additives. Moreover, this decline is more pronounced for the PHB-based composites, where, for example, the Young's modulus and tensile strength decreased from 3.83 ± 0.02 GPa and 35.9 ± 1.7 MPa to 2.02 ± 0.06 GPa and 13.6 ± 1.3 MPa, respectively, when 7.5 wt.% of TNI is added. Concerning the elongation at break, while for the PHB-based composites, no significant changes can be observed with ELO, for composites with PLA, this parameter more than doubles (1.62 ± 0.29 to 3.67 ± 0.30 %) with 7.5 wt.% of this additive.

Flexural properties

The flexural properties agree with the tensile data, which means that, for the most part, the incorporation of both additives diminishes the flexural modulus and flexural strength, and that the ELO improves the flexural strain at break of the composites (Figure 4). The flexural modulus of the PHB-based composites containing 7.5 wt.% of additives decreased to less than half of the initial value (from 5.1 ± 0.2 GPa to 2.4 ± 0.1 for TNI and 2.5 ± 0.1 GPa for ELO). On the other hand, for the PLA-based composites, the decrease in the flexural modulus with the incorporation of ELO was less pronounced. Concerning the strain at break, with the incorporation of 7.5 wt.% of ELO, a raise of 39% and 115% was observed for PHB and PLA-based composites, respectively.

There is some variability in the strain at break results with the incorporation of TNI, with decreased elongation at break for some of the composites.

Impact resistance

The impact resistance is one of the mechanical parameters that is often seriously compromised in green composites, either due to the brittleness of the matrices or to its poor interfacial adhesion with the cellulosic fibers. As observed from the results, the incorporation of ELO, at a 5 wt.% load, raises the impact strength of the composites by 36.7% and 135.7% for PHB and PLA-based composites, respectively.

The best impact resistance was obtained for composites with 5% ELO incorporation. Above this value, there are no significant improvements with the addition of higher amounts of this additive. It is important to mention that the use of ELO promotes an increase in the impact strength of these composite materials to values close to the PP and PE biocomposites currently available on the market (33 to 42 kJ.m$^{-2}$) [35,36].

<u>Melt flow rate</u>

The melt flow rate, expressed in grams of composite extruded through a nozzle in ten minutes, and measured at a constant temperature when a standard weight is applied, is an indirect measurement of melt viscosity and molecular weight of the materials and an indication of their processability [37]. The variation of the MFR of composites as a function of the load of additives is illustrated in Figure 6.

As for the PLA composites, for low percentages of TNI (2.5 wt.%), the phenomenon of migration is not observed and the MFR increases from 2.71 to 6.96 g.10min$^{-1}$. As the amount of this additive increases (greater than 5%), the melt flow rate decreases and phase separation and migration also become visible. The melt flow rate of PHB-based composites with 7.5 wt.% ELO experience a remarkable increase of 230%, from 2.55 to 8.42 g·10 min$^{-1}$.

For the composites with PLA, the addition of ELO did not change the MFR of the composites. As depicted in the SEM micrographs (Figure 2) ELO promotes the increase in the interfacial adhesion of the fibers with PLA, which prevents the melt flow rate to increase.

<u>Thermal properties</u>

Differential scanning calorimetry was performed to evaluate the impact of the additives on the onset and peak melting temperature (Tf) of the composite's matrix. The results summarized in Table 2 show that, unlike PLA-based composites where only one melting peak can be observed between 160.4 - 169.3 °C, the PHB ones have two melting peaks (135.6 - 149.2°C and 152.1 - 163.0 °C).

The second heating scans also reveal that, for the PHB-based composites, the incorporation of increasing amounts of TNI gradually lower both the onset and peak melting temperatures of the composites. For instance, the addition of 7.5 wt.% of TNI leads the melting temperatures peak to drop by 12.6 °C and 10.3 °C. On the other hand, in composites with PLA, the peak melting temperature is increased for lower loads of TNI and decreased 4.6 °C for 7.5 wt.%. With ELO, a reduction on the melting temperature was only observed for composites with PHB, mainly at higher concentrations. For the case of the composites with PLA and ELO, the melting point shifts to higher temperatures with the incorporation of this additive. For instance, 5 wt.% ELO raises the melting point from 165.0 °C to 168.9 °C. It is suggested that the increased interaction between the components of the ternary mixture with the incorporation of ELO is responsible for the increase on the melting peak. These results can be once more linked to the enhanced interfacial morphology discussed above.

Table 2. DSC and TGA data of the PHB- and PLA-based composites without additives and with different loads of TNI and ELO additives.

| Sample | DSC | | | | TGA | |
|---|---|---|---|---|---|---|
| | $T_{fi\,1}$ (°C) | $T_{fmax\,1}$ (°C) | $T_{fi2}$ (°C) | $T_{fmax\,2}$ (°C) | $T_{max1}$ (°C) | $T_{max2}$ (°C) |
| PHB_Cel | 142.7 | 148.2 | 154.2 | 162.4 | 276.2 | 351.2 |
| PHB_Cel 2.5 % TNI | 142.1 | 147.5 | 153.5 | 162.2 | 281.4 | 338.1 |
| PHB_Cel 5.0 % TNI | 136.9 | 141.9 | 149.0 | 157.2 | 275.4 | 335.9 |
| PHB_Cel 7.5 % TNI | 126.3 | 135.6 | 141.7 | 152.1 | 269.2 | 336.5 |
| PHB_Cel 2.5 % ELO | 144.0 | 149.2 | 155.9 | 163.0 | 283.1 | 346.9 |
| PHB_Cel 5.0 % ELO | 141.4 | 146.8 | 153.1 | 160.9 | 283.0 | 352.5 |
| PHB_Cel 7.5 % ELO | 140.6 | 146.0 | 152.6 | 160.9 | 276.4 | 349.7 |
| PLA Cel | 155.7 | 165.0 | - | - | 336.2 | - |
| PLA_Cel 2.5 % TNI 5.0 | 159.0 | 166.8 | - | - | 338.3 | - |
| PLA_Cel % TNI | 150.1 | 168.1 | - | - | 331.8 | - |
| PLA_Cel 7.5 % TNI | 150.7 | 160.4 | - | - | 332.9 | - |
| PLA_Cel 2.5 % ELO | 160.3 | 169.3 | - | - | 341.7 | - |
| PLA_Cel 5.0 % ELO | 158.9 | 168.9 | - | - | 339.4 | - |
| PLA_Cel 7.5 % ELO | 152.2 | 166.9 | - | - | 341.5 | - |

The thermal stability of the composites, accessed through TGA, is also presented in Table 2.

For composites with PHB, the first step, that corresponds to the degradation of the thermoplastic polymer, shifts to lower temperatures when the TNI load is over 5.0 wt.%. Additionally, for the second step, which is related with the degradation of the cellulosic fibers, the incorporation of TNI promotes a decrease on the maximum degradation temperature from 351.2 °C to 336.5 °C. For the PLA-based composite materials, the maximum degradation temperature also decreased from 336.2 °C to 332.9 °C with the addition of 7.5 wt.% TNI. With regards to ELO, for composites with PHB, a 5 wt.% load gives the best thermal stability with maximum degradation temperatures of 283.0 °C and 352.5 °C. For PLA-based materials, the maximum degradation temperature is increased up to 5.5 °C.

Water uptake capacity

In Figure 7, it is perceptible that composites with 40 wt.% of cellulose fibers absorbed water very quickly in an early stage, reaching a saturation at the end of approximately 5 days. With the addition of the additives, the water uptake of the composites is increased, for both PHB- and PLA-based materials. For example, the water uptake raised from 9.7 % (no additive) to a maximum of 12.6% (TNI) and 9.9% (ELO), for composites based on PHB and from 6.6 % (no additive) to 9.8 % (TNI) and 8.1 % (ELO), for composites based on PLA.

Also visible on the results presented in Figure 7 is that, while for composites with TNI, higher percentages of the additive resulted in higher amounts of water absorbed by the composite, the water uptake capacity remained similar for composites with increasing amounts of ELO.

Degradation in compost medium at ambient temperature

The weight loss of the composites with the additives and the reference materials was evaluated under controlled conditions, in compost medium, and the visual representation of the data is illustrated in Figure 8.

First, it is evident that the neat matrices have different degradation rates. While the pristine PHB lost 14.2% of its initial weight, the weight of pure PLA specimens was virtually unchanged during six months.

An inspection of the specimens shown in Figure 9 and the degradation profiles in Figure 8 confirms that PHB composites (without additive) have higher weight losses than PLA (without additive), which is obviously related to the degradation of the matrices, or lack thereof, as is the case with PLA. Since PLA did not show any degradation under these tested conditions, the weight loss of the composites can only be attributed to the cellulose fibers, while for the PHB composites, the weight loss is a combination of the degradation of the cellulose fibers and the PHB. It can also be observed that the rate of degradation increases with time, which is a consequence of surface erosion, which facilitates the diffusion of water and extracellular enzymes of microorganisms.

The composites with additives showed, with the exception for PLA-based composites with ELO, higher weight losses than the reference materials without additives. For instance, the incorporation of 7.5 wt.% of TNI increases the weight loss from 53.4% to 76.2% in composites with PHB and from 11.6% to 21.4% in composites with PLA.

In the case of composites with ELO, an increase in weight loss was also observed in mixtures with PHB.

Example 2

Materials

Two samples of cellulose acetate butyrate (CAB): CAB 381_0.1, with a percentage of 13.5% of acetyl groups, 38.0% of butyl groups and 1.5% of hydroxyl groups, density of 1.2 g.cm$^{-3}$ and molecular weight (Mw) of 20000 g.mol$^{-1}$; and CAB 553_0.4, with 2.0% acetyl groups, 47.0% butyl groups and 4.8% hydroxyl groups, density of 1.2 g.cm$^{-1}$ and molecular weight (Mw) of 20000 g.mol$^{-1}$, were used as polymer matrices. The mechanically treated (micronized) cellulose pulp fibers and epoxidized linseed oil (ELO) described in Example 1 were also considered in this example.

Production and processing of biocomposites

In the same way as described above, the composite materials were prepared by melt mixing the CAB samples with the micronized cellulose fibers, maintaining a percentage ratio of 60:40 of the matrix to the reinforcement fibers. The ELO additive was premixed with the fibers before mixing with the polymeric matrix, in contents of 7.5%, 15%, 22.5% and 30%, based on the total weight of the composites. The mixtures were prepared at a temperature of 170 °C for 10 min.

Characterization

Similar to what described in Example 1, the composite materials were characterized by mechanical tests of traction, flexion and impact, fluidity index and water absorption. Biodegradation tests were also carried out on compost, thermal analyzes and analyzes of the morphology of the break zone through SEM. The flow indexes of the composites were determined at a temperature of 190 °C, using a weight of 5 kg.

Mechanical Properties

The results of the tensile mechanical properties of the prepared composites, represented in Figure 10, show the effect of the addition of ELO on the Young's modulus, elongation at break and maximum tensile strength of the composites. The increase in ELO percentage caused a significant decrease in Young's modulus, reducing from $3.6 \pm 0.1$ GPa and $3.8 \pm 0.1$ GPa to $0.7 \pm 0.1$ GPa, with the incorporation of 30% ELO for CAB 381_Cel and CAB553_Cel composites, respectively. Alongside this decrease in Young's modulus, there was a marked increase in elongation at break, going from $0.6 \pm 0.2$ % to $4.3 \pm 0.4$ % for CAB 381_Cel composites and from $1.2 \pm 0.2$ % to $6.5 \pm 0.6$ % for CAB 553_Cel composites. The maximum tensile strength of the composites was also influenced by the addition of ELO, with the highest values being verified for compositions with 7.5% ELO ($40.6 \pm 3.2$ MPa and $42.6 \pm 7.7$ MPa for CAB 381_Cel and CAB 553_Cel composites, respectively). A decrease in this parameter was only observed for high amounts of ELO, more specifically for 30%. The results of the mechanical flexural tests at three points are presented in Figure 12. The values of the flexural modulus follow the same trend as those of the Young's modulus, that is, the increase in the percentage of ELO promotes a decrease in the flexural modulus. In the same way as observed in the tensile tests, in the flexural tests the addition of ELO also results in a considerable increase in elongation at break (increase of 4.5 and 6.0 times for CAB 381_Cel and CAB 553_Cel composites, respectively). The highest maximum flexural strength was also obtained for composites with 7.5% ELO, with lower values only being recorded for higher amounts (30%).

The impact resistance of the composites (Figure 13) also changed with the addition of ELO. The incorporation of increasing amounts of this additive favors the increase in impact resistance. For example, for the highest percentage of ELO (30 %), the impact resistance increased from $3.9 \pm 0.8$ kJ.m$^{-2}$ to $17.0 \pm 1.5$ kJ.m$^{-2}$ for the CAB 381_Cel composites and from $5.3 \pm 0.9$ kJ.m$^{-2}$ to $29.5 \pm 1.7$ kJ.m$^{-2}$ for the CAB 553_C composites.

Melt flow rate

Under the conditions tested, composite materials without ELO have reduced flow rates. More specifically, the composites of CAB 381_Cel have a melting index of $1.1 \pm 0.1$ g.10min$^{-1}$ and those of CAB 553_Cel of $0.6 \pm 0.1$ g.10min$^{-1}$. After ELO incorporation, even for the lowest percentages (7.5 and 15.0 %), the flow rates increased about 5 times for CAB 381_Cel and 5.5 times for CAB 553_Cel. The most significant increase was observed for composites with 30% ELO, in which the flow rate increased by $92.5 \pm 7.7$% for composites with CAB 381_Cel and $50.9 \pm 2.7$% for composites with CAB 553_Cel (Figure 14).

Water uptake capacity

The water uptake capacity profile of CAB composites, shown in Figure 15, shows rapid absorption in the first few days, followed by stabilization. It is possible to notice that in the first days the absorption is faster for the composites without additive, and after a few days of immersion in water, the water absorption values of the composites with ELO approach the ones of the composites without additive. In general, the water absorption values of plasticized composites are similar to those of composites without additive. These values vary between $9.3 \pm 0.2$% and $9.9 \pm 0.2$% for CAB 381_Cel composites and, with the exception of CAB 553_Cel with 30% ELO ($14.7 \pm 0.1$%), and between $10.6 \pm 0.1$% and $11.3 \pm 0.2$% for CAB 553_C composites.

Example 3

The same production and processing method of the biocomposites was applied, as described in Example 1 when PLA or PHB bioplastics were considered, and as described in Example 2, when CAB was considered. The same percentage of fibers in relation to the weight of bioplastic and the same aspect ratio of the micronized fibers of bleached eucalyptus Kraft pulp were also applied. However, 1% and 30% by weight of the additives based on the total weight of the biocomposite were considered.

The same observations as in Examples 1 and 2 for the results of mechanical properties, thermal, water uptake, and degradation properties were verified.

Example 4

The same method of production and processing of biocomposites as described in Example 1, when considering PLA and PHB bioplastics, was considered. When the CAB was considered, the production method of Example 2 was applied. Here, 10% and 50% by weight of micronized fibers of bleached eucalyptus Kraft pulp were considered, as well as an additive weight that varied between 2.5% and 7.5%, based on the total weight of the composites, as well as the same aspect ratio as in Example 1.

Results were obtained for the mechanical properties of tensile, flexural, impact strength, flow index, of thermal properties, water uptake, and degradation properties, in line with those obtained in Example 1 and Example 2.

Example 5

According to the use of PLA, PHB and CAB, the respective methods of Examples 1 and 2 were applied, as described in the previous Examples 3 and 4. As well as the same percentages of fibers and amounts of additive were used. However, the micronized fibers of bleached eucalyptus kraft pulp showed an aspect ratio of 8 and 45.

Results of mechanical properties, thermal properties, water uptake, and degradation were observed also in agreement with those recorded in Examples 1 and 2.

Example 6

The same biocomposite production and processing method was applied, as described in Example 1 when PLA and PHB bioplastics were considered, and as described in Example 2, when CAB was considered. The same percentage of fibers was also applied based on the weight of bioplastic, the same aspect ratio of the micronized fibers of eucalyptus Kraft pulp and the same weight of additives based on the total weight of the biocomposite. Unbleached eucalyptus Kraft pulp micronized fibers were considered.

The same observations as in Examples 1 and 2 for the results of mechanical properties, thermal, water uptakes, and degradation properties were verified.

References

1. Composites Market by Fiber Type (Glass Fiber Composites, Carbon Fiber Composites, Natural Fiber Composites), Resin Type (Thermoset Composites, Thermoplastic Composites), Manufacturing Process, End-use Industry and Region - Global Forecast to 2025 Available online: https://www.marketsandmarkets.com/Market-Reports/composite-market-200051282.html (accessed on Jan 20, 2021).

2. Jariwala, H.; Jain, P. A review on mechanical behavior of natural fiber reinforced polymer composites and its applications. J. Reinf. Plast. Compos. 2019, 38, 441-453, doi:10.1177/0731684419828524.

3. Pickering, K.L.; Efendy, M.G.A.; Le, T.M. A review of recent developments in natural fibre composites and their mechanical performance. Compos. Part A Appl. Sci. Manuf. 2016, 83, 98-112, doi:10.1016/j.compositesa.2015.08.038.

4. Dhakal, H.N. Mechanical performance of PC-based biocomposites. In Biocomposites: design and mechanical performance; Mirsa, M; Pandey, J.; Mohanty, A., Ed.; Woodhead Publishing, 2015; pp. 303-317 ISBN 9781782423942.

5. Global Biocomposites Market Size By Fiber(Wooden Fiber and Non-wood Fiber), By End-Use Industry(Building & Construction, Transportation, Consumer Goods), By Geographic Scope And Forecast Available online: https://www.verifiedmarketresearch.com/product/biocomposite-market/ (accessed on Oct 27, 2021).

6. Gholampour, A.; Ozbakkaloglu, T. A review of natural fiber composites: properties, modification and processing techniques, characterization, applications. J. Mater. Sci. 2020, 55, 829-892, doi:10.1007/s10853-019-03990-y.

7. La Mantia, F.P.; Morreale, M. Green composites: A brief review. Compos. Part A Appl. Sci. Manuf. 2011, 42, 579-588, doi:10.1016/j.compositesa.2011.01.017.

8. Ho, M.; Wang, H.; Lee, J.-H.; Ho, C.; Lau, K.; Leng, J.; Hui, D. Critical factors on manufacturing processes of natural fibre composites. Compos. Part B Eng. 2012, 43, 3549-3562, doi:10.1016/j.compositesb.2011.10.001.

9. Thompson, R.C.; Moore, C.J.; Saal, F.S.V.; Swan, S.H. Plastics, the environment and human health: Current consensus and future trends. Philos. Trans. R. Soc. B Biol. Sci. 2009, 364, 2153-2166, doi:10.1098/rstb.2009.0053.

10. Karamanlioglu, M.; Preziosi, R.; Robson, G.D. Abiotic and biotic environmental degradation of the bioplastic polymer poly(lactic acid): A review. Polym. Degrad. Stab. 2017, 137, 122-130, doi:10.1016/j.polymdegradstab.2017.01.009.

11. Dietrich, K.; Dumont, M.-J.; Del Rio, L.F.; Orsat, V. Producing PHAs in the bioeconomy - Towards a sustainable bioplastic. Sustain. Prod. Consum. 2017, 9, 58-70, doi:10.1016/j.spc.2016.09.001.

12. Henton, D.E.; Gruber, P.; Lunt, J.; Randall, J. Polylactic acid technology. In Natural Fibers, Biopolymers, and Biocomposites; 2005; pp. 527-577 ISBN 9780203508206.

13. Toriz, G.; Gatenholm, P.; Seiler, B.D.; Tindall, D.; Cellulose Fiber-Reinforced Cellulose Esters in Biocomposites for the Future in Natural Fibers, Biopolymers, and biocomposites; 2005; pp.621-626; ISBN 9780203508206.

14. Ghaffar, S.H.; Madyan, O.A.; Fan, M.; Corker, J. The Influence of Additives on the Interfacial Bonding Mechanisms Between Natural Fibre and Biopolymer Composites. Macromol. Res. 2018, 26, 851-863, doi:10.1007/s13233-018-6119-8.

15. Chen, T.; Wu, Y.; Qiu, J.; Fei, M.; Qiu, R.; Liu, W. Interfacial compatibilization via in-situ polymerization of epoxidized soybean oil for bamboo fibers reinforced poly(lactic acid) biocomposites. Compos. Part A Appl. Sci. Manuf. 2020, 138, 106066, doi:10.1016/j.compositesa.2020.106066.

16. Wypych, G. Handbook of plasticizers; Wypych, G., Ed.; 3rd Editio.; ChemTec Publishing: Toronto, 2017; ISBN 978-1-5231-0906-7.

17. Amiandamhen, S.O.; Meincken, M.; Tyhoda, L. Natural Fibre Modification and Its Influence on Fibre-matrix Interfacial Properties in Biocomposite Materials. Fibers Polym. 2020, 21, 677-689, doi:10.1007/s12221-020-9362-5.

18. Qiang, T.; Wang, J.; Wolcott, M.; Qiang, T.; Wang, J.; Wolcott, M.P. Facile Fabrication of 100% Bio-based and Degradable Ternary Cellulose/PHBV/PLA Composites. Materials (Basel). 2018, 11, 330, doi:10.3390/ma11020330.

19. Immonen, K.; Anttila, U.; Wikström, L. Coupling of PLA and bleached softwood kraft pulp (BSKP) for enhanced properties of biocomposites. J. Thermoplast. Compos. Mater. 2019, 32, 328-341, doi:10.1177/0892705718759387.

20. Menčík, P.; Přikryl, R.; Stehnová, I.; Melčová, V.; Kontárová, S.; Figalla, S.; Alexy, P.; Bočkaj, J. Effect of selected commercial plasticizers on mechanical, thermal, and morphological properties of poly(3-hydroxybutyrate)/Poly(lactic acid) /plasticizer biodegradable blends for three-dimensional (3D) print. Materials . 2018, 11, 1893, doi:10.3390/ma11101893.

21. Kontárová, S.; Přikryl, R.; Melčová, V.; Menčík, P.; Horálek, M.; Figalla, S.; Plavec, R.; Feranc, J.; Sadilek, J.; Pospíšilová, A. Printability, mechanical and thermal properties of poly(3-hydroxybutyrate)-poly(lactic acid)-plasticizer blends for three-dimensional (3D) printing. Materials . 2020, 13, 1-28, doi:10.3390/ma13214736.

22. Wypych, G. Handbook of plasticizers; Wypych, G., Ed.; 3rd Editio.; ChemTec Publishing: Toronto, 2017; ISBN 978-1-5231-0906-7.

23. Xie, G.; Zhang, Y.; Lin, W. Plasticizer combinations and performance of wood flour-poly(lactic acid) 3D printing filaments. BioResources 2017, 12, 6736-6748, doi:10.15376/biores.12.3.6736-6748.

24. Long, H.; Wu, Z.; Dong, Q.; Shen, Y.; Zhou, W.; Luo, Y.; Zhang, C.; Dong, X. Effect of polyethylene glycol on mechanical properties of bamboo fiber-reinforced polylactic acid composites. J. Appl. Polym. Sci. 2019, 136, 47709, doi:10.1002/app.47709.

25. Kumar, R.; Ofosu, O.; Anandjiwala, R.D. Macadamia nutshell powder filled poly lactic acid composites with triacetin as a plasticizer. J. Biobased Mater. Bioenergy 2013, 7, 541-548, doi:10.1166/jbmb.2013.1387.

26. Scalioni, L.V.; Gutiérrez, M.C.; Felisberti, M.I. Green composites of poly(3-hydroxybutyrate) and curaua fibers: Morphology and physical, thermal, and mechanical properties. J. Appl. Polym. Sci. 2017, 134, 44676, doi:10.1002/app.44676.

27. Panaitescu, D.M.; Nicolae, C.A.; Gabor, A.R.; Trusca, R. Thermal and mechanical properties of poly(3-hydroxybutyrate) reinforced with cellulose fibers from wood waste. Ind. Crops Prod. 2020, 145, 112071, doi:10.1016/j.indcrop.2019.112071.

28. Nguyen, V.K.; Nguyen, T.T.; Thi, T.H.P.; Pham, T.T. Effects of pulp fiber and epoxidized tung oil content on the properties of biocomposites based on polylactic acid. J. Compos. Sci. 2020, 4, 56, doi:10.3390/jcs4020056.

29. Solaiman, D.K.Y.; Ashby, R.D.; Zerkowski, J.A.; Krishnama, A.; Vasanthan, N. Control-release of antimicrobial sophorolipid employing different biopolymer matrices. Biocatal. Agric. Biotechnol. 2015, 4, 342-348, doi:10.1016/j.bcab.2015.06.006.

30. Yatigala, N.S.; Bajwa, D.S.; Bajwa, S.G. Compatibilization improves physico-mechanical properties of biodegradable biobased polymer composites. Compos. Part A Appl. Sci. Manuf. 2018, 107, 315-325, doi:10.1016/j.compositesa.2018.01.011.

31. Yu, T.; Hu, C.; Chen, X.; Li, Y. Effect of diisocyanates as compatibilizer on the properties of ramie/poly (lactic acid) (PLA) composites. Compos. Part A Appl. Sci. Manuf. 2015, 76, 20-27, doi:10.1016/j.compositesa.2015.05.010.

32. Georgiopoulos, P.; Kontou, E.; Georgousis, G. Effect of silane treatment loading on the flexural properties of PLA/flax unidirectional composites. Compos. Commun. 2018, 10, 6-10, doi:10.1016/J.COCO.2018.05.002.

33. Peltola, H.; Immonen, K.; Johansson, L.; Virkajärvi, J.; Sandquist, D. Influence of pulp bleaching and compatibilizer selection on performance of pulp fiber reinforced PLA biocomposites. J. Appl. Polym. Sci. 2019, 136, 47955, doi:10.1002/app.47955.

34. Samarth, N.B.; Mahanwar, P.A.; Samarth, N.B.; Mahanwar, P.A. Modified Vegetable Oil Based Additives as a Future Polymeric Material-Review. Open J. Org. Polym. Mater. 2015, 5, 1-22, doi:10.4236/OJOPM.2015.51001.

35. SAPPI Symbio Available online: https://www.sappi.com/symbio (accessed on Apr 22, 2021).

36. upmformi Available online: www.upmformi.com (accessed on Apr 22, 2021).

37. McKeen, L.; Introduction to the Physical, Mechanical, and Thermal Properties of Plastics and Elastomers, In: The Effect of Sterilization Methods on Plastics and Elastomers, 2018, pp.63-90. ISBN 978-0-12-814511-1.

**Claims**

1. A biocomposite comprising a bioplastic and from 10% to 50% by weight of micronized eucalyptus Kraft pulp fibers based on the weight of the bioplastic and from 1% to 30% by weight based on the total weight of the biocomposite of an additive, and wherein the bioplastic is selected from the group consisting of polylactic acid, polyhydroxybutyrate and cellulose acetate butyrate, and the additive is an epoxidized vegetable oil or a non-ionic sugar-based surfactant.

2. The biocomposite according to claim 1, wherein the micronized eucalyptus Kraft pulp fibers have an aspect ratio of 8 to 45.

3. The biocomposite according to any of the preceding claims, wherein the eucalyptus Kraft pulp is bleached or unbleached.

4. The biocomposite according to any of the preceding claims, wherein the epoxidized vegetable oil is selected from the group consisting of linseed oil, palm oil, soybean oil and jatropha oil.

5. The biocomposite according to any of the preceding claims, comprising polylactic acid or polyhydroxybutyrate and 7.5% by weight based on the total weight of the biocomposite of epoxidized linseed oil.

6. The biocomposite according to any of the preceding claims, comprising polylactic acid or polyhydroxybutyrate and up to 5% by weight based on the total weight of the biocomposite of epoxidized linseed oil.

7. The biocomposite according to any of the preceding claims, comprising cellulose acetate butyrate and from 7.5% to 30% by weight based on the total weight of the biocomposite of epoxidized linseed oil.

8. The biocomposite according to any of the preceding claims, comprising cellulose acetate butyrate and 7.5% by weight based on the total weight of the biocomposite of epoxidized linseed oil.

9. The biocomposite according to any of the preceding claims, comprising cellulose acetate butyrate and 30 % by weight based on the total weight of the biocomposite of epoxidized linseed oil.

10. A process for producing the biocomposite claimed in any of claims 1 to 9, comprising a step of mixing an epoxidized vegetable oil or a non-ionic sugar-based surfactant with micronized eucalyptus Kraft pulp fibers prior to mixing the resulting composition with a bioplastic.

**Patentansprüche**

1. Biokomposit, das einen Biokunststoff und 10 Gew.-% bis 50 Gew.-% mikronisierte Eukalyptus-Kraftzellstofffasern, bezogen auf das Gewicht des Biokunststoffs, sowie 1 Gew.-% bis 30 Gew.-% eines Additivs, bezogen auf das Gesamtgewicht des Biokomposits, umfasst, wobei der Biokunststoff aus der Gruppe bestehend aus Polymilchsäure, Polyhydroxybutyrat und Celluloseacetatbutyrat ausgewählt ist, und das Additiv ein epoxidiertes pflanzliches Öl oder ein nichtionisches zuckerbasiertes Tensid ist.

2. Biokomposit nach Anspruch 1, wobei die mikronisierten Eukalyptus-Kraftzellstofffasern ein Aspektverhältnis von 8 bis 45 aufweisen.

3. Biokomposit nach einem der vorhergehenden Ansprüche, wobei der Eukalyptus-Kraftzellstoff gebleicht oder ungebleicht ist.

4. Biokomposit nach einem der vorhergehenden Ansprüche, wobei das epoxidierte pflanzliche Öl aus der Gruppe bestehend aus Leinöl, Palmöl, Sojaöl und Jatrophaöl ausgewählt ist.

5. Biokomposit nach einem der vorhergehenden Ansprüche, umfassend Polymilchsäure oder Polyhydroxybutyrat und 7,5 Gew.-%, bezogen auf das Gesamtgewicht des Biokomposits, epoxidiertes Leinöl.

6. Biokomposit nach einem der vorhergehenden Ansprüche, umfassend Polymilchsäure oder Polyhydroxybutyrat und bis zu 5 Gew.-%, bezogen auf das Gesamtgewicht des Biokomposits, epoxidiertes Leinöl.

7. Biokomposit nach einem der vorangehenden Ansprüche, umfassend Celluloseacetatbutyrat und 7,5 bis 30 Gew.-%, bezogen auf das Gesamtgewicht des Biokomposits, epoxidiertes Leinöl.

8. Biokomposit nach einem der vorangehenden Ansprüche, umfassend Celluloseacetatbutyrat und 7,5 Gew.-%, bezogen auf das Gesamtgewicht des Biokomposits, epoxidiertes Leinöl.

9. Biokomposit nach einem der vorangehenden Ansprüche, umfassend Celluloseacetatbutyrat und 30 Gew.-%, bezogen auf das Gesamtgewicht des Biokomposits, epoxidiertes Leinöl.

10. Verfahren zur Herstellung des Biokomposits gemäß einem der Ansprüche 1 bis 9, umfassend einen Schritt, bei dem ein epoxidiertes pflanzliches Öl oder ein nichtionisches zuckerbasiertes Tensid mit mikronisierten Eukalyptus-Kraftzellstofffasern gemischt wird, bevor die resultierende Zusammensetzung mit einem Biokunststoff vermischt wird.

**Revendications**

1. Biocomposite comprenant un bioplastique et de 10 % à 50 % en poids de fibres de pâte Kraft d'eucalyptus micronisées, en fonction du poids du bioplastique, et de 1 % à 30 % en poids, en fonction du poids total du biocomposite, d'un additif, ledit bioplastique étant choisi dans le groupe constitué par l'acide polylactique, le polyhydroxybutyrate et l'acétate de cellulose butyrate, et ledit additif étant une huile végétale époxydée ou un tensioactif non ionique à base de sucre.

2. Biocomposite selon la revendication 1, dans lequel les fibres de pâte Kraft d'eucalyptus micronisées présentent un rapport de forme compris entre 8 et 45.

3. Biocomposite selon l'une quelconque des revendications précédentes, dans lequel la pâte Kraft d'eucalyptus est blanchie ou non blanchie.

4. Biocomposite selon l'une quelconque des revendications précédentes, dans lequel l'huile végétale époxydée est choisie dans le groupe constitué par l'huile de lin, l'huile de palme, l'huile de soja et l'huile de jatropha.

5. Biocomposite selon l'une quelconque des revendications précédentes, comprenant de l'acide polylactique ou du polyhydroxybutyrate et 7,5 % en poids, en fonction du poids total du biocomposite, d'huile de lin époxydée.

6. Biocomposite selon l'une quelconque des revendications précédentes, comprenant de l'acide polylactique ou du polyhydroxybutyrate et jusqu'à 5 % en poids, en fonction du poids total du biocomposite, d'huile de lin époxydée.

7. Biocomposite selon l'une quelconque des revendications précédentes, comprenant de l'acétate de cellulose butyrate et de 7,5 % à 30 % en poids, en fonction du poids total du biocomposite, d'huile de lin époxydée.

8. Biocomposite selon l'une quelconque des revendications précédentes, comprenant de l'acétate de cellulose butyrate et 7,5 % en poids, en fonction du poids total du biocomposite, d'huile de lin époxydée.

9. Biocomposite selon l'une quelconque des revendications précédentes, comprenant de l'acétate de cellulose butyrate et 30 % en poids, en fonction du poids total du biocomposite, d'huile de lin époxydée.

10. Procédé de production du biocomposite selon l'une quelconque des revendications 1 à 9, comprenant une étape de mélange d'une huile végétale époxydée ou d'un tensioactif non ionique à base de sucre avec des fibres de pâte Kraft d'eucalyptus micronisées, avant le mélange de la composition obtenue avec un bioplastique.

Fig. 1

Fig. 2

Fig. 3

Fig. 4

**A)**

**B)**

Fig. 5

Fig. 6

A)

B)

Fig. 7

A)

B)

Fig. 8

Fig. 9

A)

B)

Fig. 10

Fig. 11

Fig. 12

Fig. 13

Fig. 14

## REFERENCES CITED IN THE DESCRIPTION

### Patent documents cited in the description

- WO 2006049658 A2
- WO 2013122650 A1

- US 7256223 B2

### Non-patent literature cited in the description

- **IMMONEN KIRSI et al.** Coupling of PLA and bleached softwood kraft pulp (BSKP) for enhanced properties of biocomposites. *JOURNAL OF THERMOPLASTIC COMPOSITE MATERIALS*, 2018, vol. 32, 328-341
- **BLEDZKI ANDRZEJ K. et al.** Physico-mechanical studies of wood fiber reinforced composites. *Polymer-Plastics Technology and Engineering*, 2002, vol. 41, 435-451
- Composites Market by Fiber Type (Glass Fiber Composites, Carbon Fiber Composites, Natural Fiber Composites), Resin Type (Thermoset Composites, Thermoplastic Composites). *Manufacturing Process, End-use Industry and Region - Global Forecast to 2025*, 20 January 2021, https://www.marketsandmarkets.com/Market-Reports/composite-market-200051282.html
- **JARIWALA, H** ; **JAIN, P**. A review on mechanical behavior of natural fiber reinforced polymer composites and its applications. *J. Reinf. Plast. Compos.*, 2019, vol. 38, 441-453
- **PICKERING, K.L.** ; **EFENDY, M.G.A** ; **LE, T.M**. A review of recent developments in natural fibre composites and their mechanical performance. *Compos. Part A Appl. Sci. Manuf.*, 2016, vol. 83, 98-112
- Mechanical performance of PC-based biocomposites. **DHAKAL, H.N**. Biocomposites: design and mechanical performance. Woodhead Publishing, 2015, 303-317
- Global Biocomposites Market Size By Fiber(Wooden Fiber and Non-wood Fiber), By End-Use Industry(Building & Construction, Transportation, Consumer Goods). *Geographic Scope And Forecast*, 27 October 2021, https://www.verifiedmarketresearch.com/product/biocomposite-market
- **GHOLAMPOUR, A** ; **OZBAKKALOGLU, T**. A review of natural fiber composites: properties, modification and processing techniques, characterization, applications. *J. Mater. Sci.*, 2020, vol. 55, 829-892
- **LA MANTIA, F.P** ; **MORREALE, M**. Green composites: A brief review.. *Compos. Part A Appl. Sci. Manuf.*, 2011, vol. 42, 579-588

- **HO, M.** ; **WANG, H** ; **LEE, J.-H** ; **HO, C** ; **LAU, K** ; **LENG, J.** ; **HUI, D**. Critical factors on manufacturing processes of natural fibre composites.. *Compos. Part B Eng.*, 2012, vol. 43, 3549-3562
- **THOMPSON, R.C** ; **MOORE, C.J** ; **SAAL, F.S.V** ; **SWAN, S.H**. Plastics, the environment and human health: Current consensus and future trends. *Philos. Trans. R. Soc. B Biol. Sci.*, 2009, vol. 364, 2153-2166
- **KARAMANLIOGLU, M.** ; **PREZIOSI, R** ; **ROBSON, G.D**. Abiotic and biotic environmental degradation of the bioplastic polymer poly(lactic acid): A review.. *Polym. Degrad. Stab.*, 2017, vol. 137, 122-130
- **DIETRICH, K** ; **DUMONT, M.-J** ; **DEL RIO, L.F** ; **ORSAT, V**. Producing PHAs in the bioeconomy - Towards a sustainable bioplastic.. *Sustain. Prod. Consum.*, 2017, vol. 9, 58-70
- **HENTON, D.E** ; **GRUBER, P** ; **LUNT, J** ; **RANDALL, J**. Polylactic acid technology. *Natural Fibers, Biopolymers, and Biocomposites*, 2005, ISBN 9780203508206, 527-577
- **TORIZ, G** ; **GATENHOLM, P** ; **SEILER, B.D** ; **TINDALL, D**. *Cellulose Fiber-Reinforced Cellulose Esters in Biocomposites for the Future in Natural Fibers, Biopolymers, and biocomposites*, 2005, ISBN 9780203508206, 621-626
- **GHAFFAR, S.H** ; **MADYAN, O.A.** ; **FAN, M** ; **CORKER, J**. The Influence of Additives on the Interfacial Bonding Mechanisms Between Natural Fibre and Biopolymer Composites. *Macromol. Res.*, 2018, vol. 26, 851-863
- **CHEN, T** ; **WU, Y** ; **QIU, J.** ; **FEI, M** ; **QIU, R** ; **LIU, W**. Interfacial compatibilization via in-situ polymerization of epoxidized soybean oil for bamboo fibers reinforced poly(lactic acid) biocomposites. *Compos. Part A Appl. Sci. Manuf.*, 2020, vol. 138, 106066
- **WYPYCH, G**. Handbook of plasticizers. ChemTec Publishing, 2017
- **AMIANDAMHEN, S.O** ; **MEINCKEN, M.** ; **TYHODA, L**. Natural Fibre Modification and Its Influence on Fibre-matrix Interfacial Properties in Biocomposite Materials. *Fibers Polym*, 2020, vol. 21, 677-689

- **QIANG, T.** ; **WANG, J.** ; **WOLCOTT, M** ; **QIANG, T** ; **WANG, J** ; **WOLCOTT, M.P.** Facile Fabrication of 100% Bio-based and Degradable Ternary Cellulose/PHBV/PLA Composites.. *Materials (Basel).*, 2018, vol. 11, 330
- **IMMONEN, K.** ; **ANTTILA, U** ; **WIKSTRÖM, L**. Coupling of PLA and bleached softwood kraft pulp (BSKP) for enhanced properties of biocomposites. *J. Thermoplast. Compos. Mater.*, 2019, vol. 32, 328-341
- **MENČÍK, P.; PŘIKRYL, R.** ; **STEHNOVÁ, I** ; **MELČOVÁ, V.** ; **KONTÁROVÁ, S** ; **FIGALLA, S** ; **ALEXY, P** ; **BOČKAJ**. J. Effect of selected commercial plasticizers on mechanical, thermal, and morphological properties of poly(3-hydroxybutyrate)/Poly(lactic acid) /plasticizer biodegradable blends for three-dimensional (3D) print. *Materials*, 2018, vol. 11, 1893
- **KONTÁROVÁ, S** ; **PŘIKRYL, R** ; **MELČOVÁ, V** ; **MENČÍK, P** ; **HORÁLEK, M** ; **FIGALLA, S** ; **PLAVEC, R** ; **FERANC, J.** ; **SADILEK, J.** ; **POSPÍŠILOVÁ, A**. Printability, mechanical and thermal properties of poly(3-hydroxybutyrate)-poly(lactic acid)-plasticizer blends for three-dimensional (3D) printing. *Materials*, 2020, vol. 13, 1-28
- **XIE, G.** ; **ZHANG, Y** ; **LIN, W.** Plasticizer combinations and performance of wood flour-poly(lactic acid) 3D printing filaments. *BioResources*, 2017, vol. 12, 6736-6748
- **LONG, H** ; **WU, Z.** ; **DONG, Q** ; **SHEN, Y** ; **ZHOU, W.** ; **LUO, Y** ; **ZHANG, C** ; **DONG, X**. Effect of polyethylene glycol on mechanical properties of bamboo fiber-reinforced polylactic acid composites. *J. Appl. Polym. Sci.*, 2019, vol. 136, 47709
- **KUMAR, R** ; **OFOSU, O.** ; **ANANDJIWALA, R.D**. Macadamia nutshell powder filled poly lactic acid composites with triacetin as a plasticizer. *J. Biobased Mater. Bioenergy*, 2013, vol. 7, 541-548
- **SCALIONI, L.V** ; **GUTIÉRREZ, M.C** ; **FELISBERTI, M.I.** Green composites of poly(3-hydroxybutyrate) and curaua fibers: Morphology and physical, thermal, and mechanical properties.. *J. Appl. Polym. Sci.*, 2017, vol. 134, 44676
- **PANAITESCU, D.M** ; **NICOLAE, C.A** ; **GABOR, A.R** ; **TRUSCA, R.** Thermal and mechanical properties of poly(3-hydroxybutyrate) reinforced with cellulose fibers from wood waste. *Ind. Crops Prod.*, 2020, vol. 145, 112071
- **NGUYEN, V.K** ; **NGUYEN, T.T** ; **THI, T.H.P** ; **PHAM, T.T**. Effects of pulp fiber and epoxidized tung oil content on the properties of biocomposites based on polylactic acid. *J. Compos. Sci.*, 2020, vol. 4, 56
- **SOLAIMAN, D.K.Y.** ; **ASHBY, R.D** ; **ZERKOWSKI, J.A.** ; **KRISHNAMA, A.;** ; **VASANTHAN, N**. Control-release of antimicrobial sophorolipid employing different biopolymer matrices. *Biocatal. Agric. Biotechnol.*, 2015, vol. 4, 342-348
- **YATIGALA, N.S** ; **BAJWA, D.S** ; **BAJWA, S.G.** Compatibilization improves physico-mechanical properties of biodegradable biobased polymer composites.. *Compos. Part A Appl. Sci. Manuf.*, 2018, vol. 107, 315-325
- **YU, T** ; **HU, C.** ; **CHEN, X** ; **LI, Y**. Effect of diisocyanates as compatibilizer on the properties of ramie/poly (lactic acid) (PLA) composites. *Compos. Part A Appl. Sci. Manuf.*, 2015, vol. 76, 20-27
- **GEORGIOPOULOS, P** ; **KONTOU, E.** ; **GEORGOUSIS, G**. Effect of silane treatment loading on the flexural properties of PLA/flax unidirectional composites. *Compos. Commun.*, 2018, vol. 10, 6-10
- **PELTOLA, H** ; **IMMONEN, K** ; **JOHANSSON, L.** ; **VIRKAJÄRVI, J.** ; **SANDQUIST, D**. Influence of pulp bleaching and compatibilizer selection on performance of pulp fiber reinforced PLA biocomposites.. *J. Appl. Polym. Sci.*, 2019, vol. 136, 47955
- **SAMARTH, N.B** ; **MAHANWAR, P.A.** ; **SAMARTH, N.B** ; **MAHANWAR, P.A**. Modified Vegetable Oil Based Additives as a Future Polymeric Material-Review. *Open J. Org. Polym. Mater.*, 2015, vol. 5, 1-22
- *SAPPI Symbio*, 22 April 2021, https://www.sappi.com/symbio
- **MCKEEN, L**. Introduction to the Physical, Mechanical, and Thermal Properties of Plastics and Elastomers. *The Effect of Sterilization Methods on Plastics and Elastomers*, 2018, ISBN 978-0-12-814511-1, 63-90